# EUROPEAN PATENT APPLICATION

(11) **EP 0 521 661 A1**
(43) Date of publication of application: **07.01.1993**
(21) Application number: 92305889.5
(22) Date of filing: 26.06.1992
(51) Int. Cl.: B29C 37/00, B29C 33/68

(54) **Tack free coating and method of manufacture of tack free coated thermoplastic materials**

(30) Priority: 29.06.1991 GB 9114112
(71) Applicant: Draper, Neil, Naas, Co. Kildare (IE)
(72) Inventor: Draper, Neil, Naas, Co. Kildare (IE)
(74) Representative: Yeadon, Mary Elizabeth

(57) **Abstract**

There is described a process for the manufacture of a handleable portion of a coated thermoplastic material, which comprises:
melting the thermoplastic material;
lining the mould surface of a mould (1) with a liner (3) formed from a film of thermoplastic material capable of associating with the melted thermoplastic material to form a tack-free coating thereon;
pouring the melted thermoplastic material (4) into the mould so as to contact the liner;
allowing the melted thermoplastic material to cool and solidify; and
removing the solidified thermoplastic material provided with a tack-free coating from the mould. There is also described a film of thermoplastic material capable of associating with a melted thermoplastic material so as to form a tack-free coating thereon. The invention is particularly useful in the processing of hot melt adhesives.

## Description

This application relates to a tack free coating for a thermoplastic material, e.g. a hot melt adhesive, and a method of making coated thermoplastic materials.

Several thermoplastic materials are made by processes in which they are formed into a molten state but need to then be solidified for transporting to the end user. Examples of such materials are sealants, coatings, bitumens, bituminous compounds, thermosetting resins, hot melt adhesives and waxes. Such materials may be difficult to handle due to their having a sticky or tacky outer surface.

Hot melt adhesive is a 100% solid thermoplastic adhesive which is formulated using natural and synthetic resins, rubbers, polymers and other raw materials. It is mixed in the molten state but normally solidified by the manufacturer and supplied to the customer in the solid state to be remelted by him in specialised process equipment prior to application. Hot melt adhesives are widely used in the manufacture of self adhesive labels, tapes, disposable sanitary items, disposable nappies or diapers, product assembly, packaging and many other bonding methods.

Some types of hot melt adhesives are naturally dry and tack free on the surface when solid. These may be formed into small pellets which can be conveniently packed into boxes or sacks. Other types of hot melt adhesives are permanently tacky on the surface when solid and are therefore difficult to package. They could be made into small pieces but during packaging would be likely to stick together because of their surface tack forming a large conglomerate which would be difficult for customers to process in standard equipment.

Various methods have been devised to process and pack hot melt adhesive. The traditional method is to dispense molten hot melt adhesive from a mixing vessel into liquid proof cardboard boxes lined with heat resistant silicone coated release paper. The adhesive solidifies in the box and is then shipped to the customer. The customer is able to peel away the cardboard box to which the adhesive will not stick because of its silicone coated release paper leaving a solid block of adhesive which is convenient to process.

The disadvantages of this method are:
the silicone lined boxes are expensive to produce;
the silicone lined boxes are costly to assembly and store;
automated cooling is difficult because of the inherent design of the containers and the insulating properties of the packaging materials;
when unwrapped the block of adhesive is possessed of surface tack which can attract contaminants such as dust;
the surface tack makes the block awkward to handle;
unwrapping the paper from the block is time consuming; and
the customer has the problem of disposing of the waste silicone coated paper and the cardboard boxes.

To overcome these disadvantages other processes have been devised.

In one known process, as the hot melt adhesive is being dispensed from the mixing vessel or holding tank it has another thermoplastic material, which is tack free, co-extruded around it. The hot melt adhesive is formed into small pieces which are encapsulated in the second thermoplastic material and then is cooled to a solid. When solid the thermoplastic material around the hot melt adhesive has a dry surface. The pieces of hot melt adhesive can therefore be packed in the normal way. The customer can put the encapsulated pieces of adhesive into his melting equipment and the outer skin will melt into the adhesive.

The disadvantages of this system are:
the processing system involves a high capital cost;
the adhesive may need to be partially cooled before it can be processed on the system;
due to varying mixing temperatures, melt viscosities, and other physical characteristics only a limited number of types of hot melt adhesive may be processed in this way; and
a relative large amount of the other thermoplastic material is used, and can adversely affect the hot melt adhesive when the user re-melts the encapsulated hot melt adhesive for processing.

In another known process the adhesive is dispensed from a mixing vessel or holding tank into moulds made from metal or other rigid material. These moulds are pre-treated with a release agent and are coated on the inside by electrostatic means with a powdered thermoplastic material. The moulds are conveyed through a cooling process. When solidified the thermoplastic material forms a dry surface on four sides and the bottom of the block. By putting the top surfaces of two blocks together a double sized block is formed with a completely dry surface. The blocks may be packed in the normal way. The customer can put the block into his melting equipment and the outer skin will melt into the adhesive.

The disadvantages of this system are:
the coating and cooling of the moulds involves high capital cost;
the manufacturer needs to clean and re-coat the moulds between each batch of adhesive; and
only four sides and the bottom of the block can be made with a dry surface - to achieve complete surface dryness the blocks need to be put together or another process introduced.

According to a first aspect of the present invention there is provided a process for the manufacture of a handleable portion of a coated thermoplastic material, which comprises:
melting the thermoplastic material;
lining the mould surface of a mould with a liner formed from a film of thermoplastic material capable of associating with the melted thermoplastic material to form a tack-free coating thereon;
pouring the melted thermoplastic material into the mould so as to contact the liner;
allowing the melted thermoplastic material to cool and solidify; and
removing the solidified thermoplastic material provided with a tack-free coating from the mould.

The melted thermoplastic material is poured directly into the moulds. It does not need to be precoated or partially solidified prior to that step.

The melted thermoplastic material which is to be coated is preferably a hot melt thermoplastic material. It may be selected from a sealant, a coating, a bitumen, a bitumous compound, a thermosetting resin, and a wax and is preferably a hot melt adhesive.

The mould is preferably provided at least on its mould surface with a release coating.

According a second aspect of the present invention there is provided a mould for use in the production of a handleable portion of a coated thermoplastic material, which mould is able to form the thermoplastic material into a desired shape and size and in which at least the mould surface has a release coating.

The mould is preferably release coated with a silicone elastomer. The entire mould may be release coated or just the mould surface. Alternatively the entire mould could be made from a material having good release properties.

The mould may be made of any suitable material, e.g. a metal or metal alloy, cardboard, a plastics material or silicone elastomer. Silicone elastomer for the release coating or for the material from which the mould is made is preferred because:
it has good heat resistance and is able to withstand high filling temperature;
it has very good release properties;
it can be moulded to any shape or size to meet customer requirements;
it is durable for repeated use over long periods;
it is flexible to allow easy removal of the block of thermoplastic material.

The mould may be adapted to allow for the rapid cooling of the melted thermoplastic material contained therein. The mould may for example be provided with cooling vents, alternatively the rapid cooling could be effected by passing a coolant through the mould itself.

The mould may be of any suitable shape or dimension so as to be able to mould the melted thermoplastic material to the desired size and shape. It may, for example, have a volumetric capacity in the range of 50 ml to 30 litres, e.g. of 100ml to 25 litres.

According to a third aspect of the present invention there is provided a film of thermoplastic material capable of associating with a melted thermoplastic material so as to form a tack-free coating thereon.

According to a fourth aspect of the present invention there is provided the use of a film of a thermoplastic material in the lining of a mould for use in the production of a handleable portion of a coated thermoplastic material.

The film of thermoplastic material reacts in such a way with the melted thermoplastic material that a tack-free surface remains on the surface of that material after it is removed from the mould.

The film of thermoplastic material should have sufficient strength and other properties to make it formable into a suitable shape to fit the mould.

The film when shaped into a liner should be strong enough to withstand the rigours of shipment to the customer without suffering damage.

The film of thermoplastic material should melt into and combine with the thermoplastic material to be coated.

The film may be formed from the thermoplastic material by any suitable means, e.g. by extrusion.

The film may be formed to any desired dimensions. The film may, for example, have a thickness in the range of 50 to 750 micrometres, preferably 100 to 500 micrometres, more preferably 250 to 350 micrometres e.g. approximately 300 micrometres.

The amount and thickness of the film used as a liner will determine the amount of thermoplastic material from which it is made which will be present in the melt when the end user re-melts the coated thermoplastic material for further processing. Preferably the amount of thermoplastic material of the film is no more than 3% of the handleable portion of coated thermoplastic material, more preferably that amount is less than 1.5%, e.g. around 1.2% or less.

A favourable formulation for the thermoplastic material from which the film is formed is a combination of a high molecular weight polymer with a low molecular weight polymer. The combination must be able to be formed into a film. The high molecular weight polymer provides strength and flexibility. The low molecular weight polymer provides a high melt and blocking point for good tack free properties and provides a control of viscosity to help in processing.

A preferred type of high molecular weight polymer is an ethylene/vinyl acetate copolymer. It preferably has a vinyl acetate content between 11% and 40% and a melt flow index between 0.5 and 800.

More preferably the high molecular weight ethylene/vinyl acetate copolymer used has a vinyl acetate content between 14% and 36% and a melt flow index between 60 and 600.

Most preferably the high molecular weight ethylene/vinyl acetate copolymer used has a vinyl acetate content between 18% and 33% and a melt flow index of between 200 and 400.

The ethylene/vinyl acetate is preferably heat resistant, flexible and tough, but processable so that it will blend into the hot melt adhesive when it is remelted by the customer.

A preferred type of low molecular weight polymer has a melt temperature of between 70° and 140°C and a Brookfield viscosity at 150°C of between 10 and 6000 cps.

More preferably the low molecular weight polymer has a melt temperature of between 80° and 130°C and a Brookfield viscosity at 140°C of between 100 and 4000 cps.

Most preferably the low molecular weight polymer has a melt temperature between 85° and 120°C and a Brookfield viscosity at 140°C of between 350 and 650 cps.

A particularly preferred low molecular weight polymer is a copolymer of ethylene and vinyl acetate with a melt temperature of 95°C and a Brookfield viscosity at 140°C of 610 cps.

The low molecular weight polymer may be a wax material such as a polyethylene, preferably containing a vinyl acetate proportion, or microcrystalline wax. The wax material should have a sharp melting point and a low viscosity. It requires a certain amount of adhesive strength to be able to be formed into a film.

One preferred material for use as the low molecular weight polymer is the compound known as AC400 as manufactured by Allied Chemicals.

Another preferred material is a microcrystalline wax. One such microcrystalline wax, but to which the present invention is not limited, has the following technical specification:
- Melting point: ASTM D 127 91°C
- Viscosity at 99°C: ASTM D 445 16 Centi Stokes
- Penetration at 25°C: ASTM D 1321 9.

The balance of the two components is important. The ratio of components should be such that the mixture is easy to work with and to extrude.

Preferably the components are present in a range between 20% and 80% high molecular weight polymer to between 80% and 20% low molecular weight polymer.

More preferably the range is between 25% and 60% high molecular weight polymer to between 75% and 40% low molecular weight polymer.

Most preferably the range is between 30% and 50% high molecular weight polymer to 70% and 50% low molecular weight polymer.

Two particularly preferred combinations are 40% high molecular weight polymer to 60% low molecular weight polymer and 50% of each component.

The softening point of the film may be in the range of 60 to 120°C, more particularly in the range of 80 to 100°C.

The film of thermoplastic material may be placed directly in the moulds or it may be shaped so as to form a suitable liner by any appropriate means. It may for example be formed into shape by means of cutting if required and bonding with an adhesive. Alternatively the liner may be formed from the film by thermoforming or vacuum forming.

According to a fifth aspect of the present invention there is provided a method of forming a film of a thermoplastic material into a shape so that it can be used in the fourth aspect of the present invention which method comprises:
preparing a forming tool in the shape desired;
softening the film by the application of heat;
bringing the film into contact with the surfaces of the forming tool by means of mechanical, air or vacuum pressure;
cooling the formed film; and
removing the formed film from the forming tool.

According to a sixth aspect of the present invention there is provided a handleable portion of moulded thermoplastic material which is provided with a tack-free coating formed from a film of thermoplastic material.

With the present invention individual handleable portions of thermoplastic material can be formed. They can vary in size and shape as desired. They may, for example vary in weight from 100 gm portions up to 50 Kg portions.

The coated thermoplastic material may be admixed with one or more of the following: a plasticizer, a stabilizer, a dye, a perfume, a filler or other material which is able to increase its flexibility, handleability and visibility.

The advantages of the invention are as follows:
portions of coated thermoplastic material of any size and shape can be produced by varying the size and shape of the moulds;
using moulds additional machinery for cutting the thermoplastic material formed into shape by other methods, e.g. extrusion, is not required;
the portion or block of coated thermoplastic material is tack-free and therefore easy to handle;
there is a lower risk of contaminants such as dust or paper adhering to the adhesive block;
the cost of packaging is significantly reduced compared to siliconised paper packaging;
there is no waste silicone paper to be disposed of;
the invention can be used with conventional filling equipment and cooling processes, no additional machines are needed;
the filled moulds may be cooled by automatic processes if desired;
the melted thermoplastic material can be filled into the mould at normal processing temperatures, no pre-cooling is necessary;
the invention works with a wider range of thermoplastic materials, e.g. hot melt adhesive types, than other automatable systems are able to;
the invention enables all surfaces of the coated thermoplastic material to be tack free; and
the moulds can be continually re-used with no need for cleaning or treating between each batch.

For a better understanding of the present invention and to show how the same may be put into effect reference will now be made by way of example to the accompanying drawings in which:
Figure 1 is a schematic representation of a first method according to the invention; and
Figure 2 is a schematic representation of another method according to the invention.

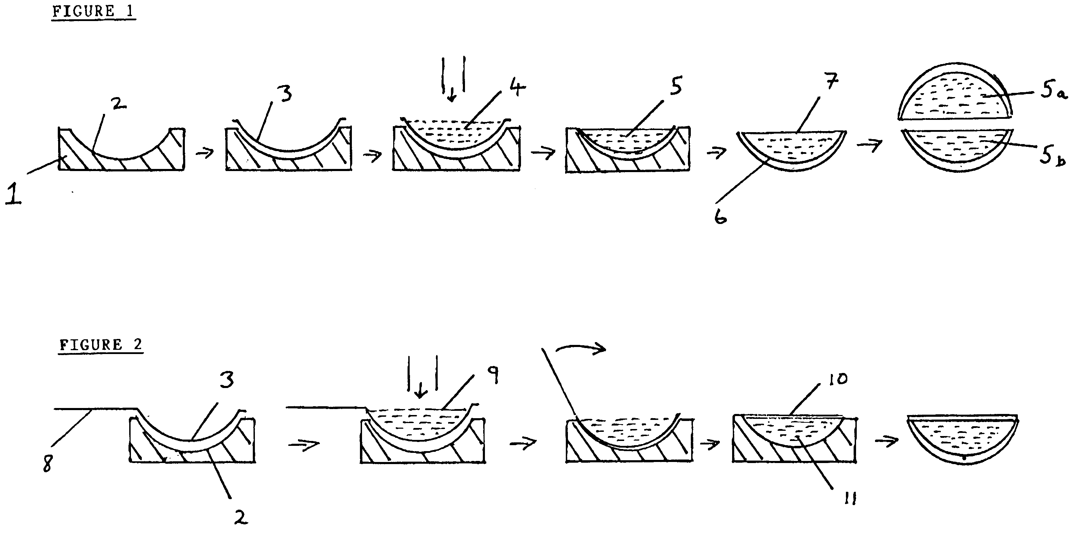

In the method shown in Figure 1, a mould (1) of silicone rubber with a hemi-spherical mould surface (2) is lined with a liner (3) formed from a film of thermoplastic material. Melted hot melt adhesive (4) is poured into the mould (1) on top of the liner (3), and left to solidify upon cooling to a block of hot melt adhesive (5). The liner (3) reacts with the melted hot melt adhesive (4) in such a way as to become bonded as a surface coating (6) thereto. The block has a tacky top surface (7) as that surface had not been in contact with the liner (3). To cover the tacky top surface (7) two blocks (5a b) can be combined. Alternatively the top surface (7) can be sprayed with the thermoplastic material which forms the film or any other tack-free coating, for example in the form of a powder.

In the method shown in Figure 2 a metal mould having a release coating of silicone elastomer is used. The liner (3) is provided with an extended portion (8) which extends beyond the mould (1) when the liner is placed over the mould surface (2). The extended portion (8) can be folded over on top of the top surface (9) of the melted hot melt adhesive (4) and thereby forms a top surface coat (10) on the solidified block of hot melt adhesive (11). As the block (11) when removed from the mould has a tack-free coating all over it does not require to be combined with other blocks. Alternatively the extended portion (8) could be a separate piece of the thermoplastic material which is placed on the top surface (9) of the melted hot melt adhesive by manual or automatic means and thereby forms a top surface coat (10).

## Claims

1. A process for the manufacture of a handleable portion of a coated thermoplastic material, which comprises:
melting the thermoplastic material;
lining the mould surface of a mould with a liner formed from a film of thermoplastic material capable of associating with the melted thermoplastic material to form a tack-free coating thereon;
pouring the melted thermoplastic material into the mould so as to contact the liner;
allowing the melted thermoplastic material to cool and solidify; and
removing the solidified thermoplastic material provided with a tack-free coating from the mould.

2. A process according to claim 1, wherein the thermoplastic material to be coated is a hot melt adhesive.

3. A mould for use in the production of a handleable portion of a coated thermoplastic material, which mould is able to form the thermoplastic material into a desired shape and size and in which at least the mould surface has a release coating.

4. A film of thermoplastic material capable of associating with a melted thermoplastic material so as to form a tack-free coating thereon.

5. Use of a film of a thermoplastic material in the lining of a mould for use in the production of a handleable portion of a coated thermoplastic material.

6. A method of forming a film of a thermoplastic material into a shape so that it can be used as the lining of a mould for use in the production of a handleable portion of a coated thermoplastic material, which method comprises:
preparing a forming tool in the shape desired;
softening the film by the application of heat;
bringing the film into contact with the surfaces of the forming tool by means of mechanical, air or vacuum pressure;
cooling the formed film; and
removing the formed film from the forming tool.

7. A handleable portion of a moulded thermoplastics material which is provided with a tack-free coating formed from a film of thermoplastic material.

8. A film of thermoplastic material capable of associating with a melted thermoplastic material so as to form a tack-free coating thereon, which is formed from a high molecular weight polymer and a low molecular weight polymer, wherein the high molecular weight polymer is a an ethylene/vinyl acetate copolymer having a vinyl acetate content between 11% and 40% and a melt flow index between 0.5 and 800 and the low molecular weight polymer has a melt temperature between 70° and 140°C and a Brookfield viscosity at 150°C of between 10 and 6000 cps.

9. A film according to claim 8, wherein the low molecular weight polymer is a polyethylene, optionally containing a vinyl acetate proportion, or is a microcrystalline wax.
